# EUROPEAN PATENT APPLICATION

(11) **EP 3 745 727 A1**
(43) Date of publication of application: **02.12.2020**
(21) Application number: 18897396.0
(22) Date of filing: 13.12.2018
(51) Int. Cl.: H04N 21/234

(54) **METHOD AND DEVICE FOR DATA PROCESSING**

(30) Priority: 26.12.2017 CN 201711435400
(71) Applicant: ZTE Corporation, Shenzhen, Guangdong 518057 (CN)
(72) Inventor: XU, Weichang, Shenzhen, Guangdong 518057 (CN); TIAN, Zhiping, Shenzhen, Guangdong 518057 (CN); XU, Qian, Shenzhen, Guangdong 518057 (CN)
(74) Representative: Petraz, Gilberto Luigi
(86) International application number: PCT/CN2018/120770
(87) International publication number: WO 2019/128724

(57) **Abstract**

A method and a device for data processing are disclosed. The method for data processing includes: determining, according to an audio feature of a target video and by using a feature database, whether the target video includes a duplicate video (S101); and filtering, if it is determined that the target video includes a duplicate video, the duplicate video (S102).

## Description

This application claims the priority of Chinese patent application with application number 201711435400.5 submitted to China Patent Office on December 26, 2017, the entirety of which is incorporated herein by reference.

### Field of the Invention

The present disclosure relates to but is not limited to the technical field of data processing. The present disclosure, for example, relates to a method and a device for data processing.

### Background of the Invention

At present, recording functions of set-top boxes have gradually become common functions of set-top boxes. A video recorded by a set-top box and a video recorded for a replay of a program in an interactive internet protocol television (IPTV) are to directly record a complete live video, including, for example, recording videos of an opening title sequence, a closing title sequence, and an advertisement put in the main part of a TV drama; when a user watches a recorded program on-demand, the user needs to first watch an opening title sequence or an advertisement and then watch a main part. In addition, when a user watches a video on-demand from the Internet on a smart OTT (Over the Top) set-top box, a mobile phone, a tablet computer, etc., if the user does not want to watch an opening title sequence or an advertisement, the user has to skip the opening title sequence or the advertisement by manually fast forwarding, which is not only inconvenient to operate but also prone to inaccuracy, leading to repeated operations of fast forwarding and rewinding.

### Summary of the Invention

The following is a summary of subject matters detailed herein. This summary is not intended to limit the protection scope of the claims.

Embodiments of the present disclosure provide a method and a device for data processing, which can identify duplicate videos, and can thereby improve user experience.

An embodiment of the present disclosure provides a method for data processing, including: determining, according to an audio feature of a target video and by using a feature database, whether the target video includes a duplicative video, the feature database being obtained by learning an audio feature of at least one video; and filtering, if it is determined that the target video includes a duplicative video, the duplicative video.

An embodiment of the present disclosure provides a device for data processing, including: an identification module, a feature database, and a processing module.

The identification module is configured to determine, according to an audio feature of a target video and using the feature database, whether the target video includes a duplicative video. The feature database is obtained by learning an audio feature of at least one video.

The processing module is configured to filter, when the identification module determines that the target video includes a duplicate video, the duplicate video.

An embodiment of the present disclosure provides a device for data processing, including: a memory and a processor. The memory is configured to store a data processing program. The data processing program, when being executed by the processor, implements the above provided method for data processing.

Further, an embodiment of the present disclosure provides a computer-readable medium storing a data processing program. The data processing program, when being executed by a processor, implements the above provided method for data processing.

### Brief Description of the Drawings

Fig. 1 is a flowchart of a method for data processing provided by an embodiment of the present disclosure;
Fig. 2 is a schematic diagram of a device for data processing provided by an embodiment of the present disclosure;
Fig. 3 is a flowchart of Embodiment 1 of the present disclosure;
Fig. 4 is a flowchart of a process of detecting and identifying a duplicate video according to Embodiment 1 of the present disclosure;
Fig. 5 is a flowchart of aging processing of a feature database according to Embodiment 1 of the present disclosure;
Fig. 6 is a flowchart of Embodiment 2 of the present disclosure;
Fig. 7 is a flowchart of Embodiment 3 of the present disclosure;
Fig. 8 is a flowchart of Embodiment 4 of the present disclosure;
Fig. 9 is a schematic diagram showing structure of a playing device according to Embodiments 2 to 4 of the present disclosure;
Fig. 10 is a flowchart of Embodiment 5 of the present disclosure;
Fig. 11 is a schematic diagram showing structure of a recording device according to Embodiment 5 of the present disclosure; and
Fig. 12 is a schematic diagram of a device for data processing provided by an embodiment of the present disclosure.

### Detailed Description of the Embodiments

Embodiments of the present disclosure will be described in detail below with reference to the accompanying drawings. It shall be appreciated that the embodiments described below are intended only for describing and explaining the present disclosure, rather than limiting the present disclosure.

Steps shown in the flowcharts of the accompanying drawings may be executed in a computer system such as a set of computer-executable instructions. Although logical orders are shown in the flowcharts, in some cases, the steps shown or described may be performed in orders different from those described herein.

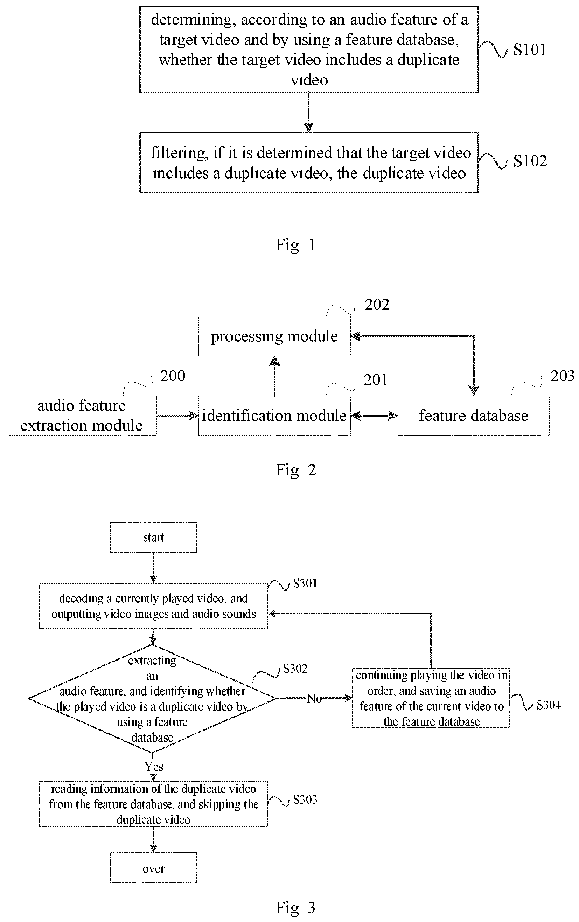

Fig. 1 is a flowchart of a method for data processing provided by an embodiment of the present disclosure. As shown in Fig. 1, the method for data processing provided in this embodiment includes steps S101 and S102.

In step S101, it is determined, according to an audio feature of a target video and by using a feature database, whether the target video includes a duplicate video.

The feature database is formed by learning an audio feature of at least one video.

In step S102, if it is determined that the target video includes a duplicate video, the duplicate video is filtered.

The method for data processing provided in this embodiment may be applicable to a terminal, such as a set-top box, a smart phone, a tablet computer, and the like. The present disclosure, however, is not limited in this respect. In other embodiments, the method for data processing provided in this embodiment may also be applicable to a server-side computing device, such as a server.

In an exemplary embodiment, the method for data processing in this embodiment may also include obtaining the feature database by learning an audio feature of at least one video through the following ways: adding a video record corresponding to any video to the feature database if there is no video record in the feature database; and updating, if there is a video record in the feature database, the feature database according to a matching result between the audio feature of the video and an audio feature of the video record in the feature database.

The above video may include at least one of the following: a video being played, a video to be recorded, and a video to be played. The present disclosure, however, is not limited in this respect. As an example, the feature database may be created and continuously updated during playing of a video, or may be created and continuously updated during recording of a video, or may be created according to audio features of a plurality of videos to be played and continuously updated during playing of a video. The present disclosure, however, is not limited in this respect.

In this embodiment, for any video, an audio feature and video attribute information (such as duration information, file name, etc.) of the video may be extracted. The feature database may be empty at an initial stage. After audio features of one or more videos are learned, one or more video records will be saved in the feature database. Information saved in each video record may include: an occurrence number, whether it is a duplicate video, an audio feature, and duration information. When the occurrence number of a video record is 1, information saved in the video record may further include at least one of the following: a file name, a path, a uniform resource locator (URL), total duration, and duration having been played, of a video.

In an exemplary embodiment, updating, if there is a video record in the feature database, the feature database according to a matching result between the audio feature of the video and an audio feature of the video record in the feature database, may include: updating, if there is a video record in the feature database that matches the audio feature of the video, information saved in the matched video record in the feature database; and adding, if there is no video record in the feature database that matches the audio feature of the video, a video record corresponding to the video to the feature database.

In an exemplary embodiment, updating, if there is a video record in the feature database that matches the audio feature of the video, information saved in the matched video record in the feature database, may include: retaining, when duration of continuous matching between the audio feature of the video and an audio feature of one video record in the feature database is greater than or equal to a duration threshold, the audio feature of the video record that corresponds to the duration of continuous matching; and adding 1 to an occurrence number of the video record present in the feature database, and marking, when the occurrence number of the video record with the addition of 1 is greater than or equal to an occurrence number threshold, the video record as a duplicate video.

For example, when an occurrence number of a video record is greater than or equal to 2, the video record may be marked as a duplicate video. The present disclosure, however, is not limited in this respect.

In this embodiment, the target video may include at least one of the following: a video being played, a video to be recorded, and a video to be played. The duplicate video may be an advertisement video, an opening title sequence video of a TV drama, etc. The present disclosure, however, is not limited in this respect.

In an embodiment, the terminal, while playing a video, may perform identification of a duplicate video using the feature database and update the feature database; or, the terminal may perform learning of a plurality of locally stored videos, update the feature database, and identify a duplicate video directly using the updated feature database during playing of a locally stored video; or, the server may perform identification and learning of a duplicate video when recording a video, and record a video based on the updated feature database after the learning, to skip the duplicate video. The present disclosure, however, is not limited in this respect.

In an exemplary embodiment, before step S101, the method for data processing in this embodiment may further include: extracting the audio feature of the target video; and step S101 may include: matching the audio feature of the target video with an audio feature of a video record in the feature database; and identifying whether the target video includes a duplicate video according to a matching result between the audio feature of the target video and the audio feature of the video record in the feature database.

In an embodiment, identifying whether the target video includes a duplicate video according to a matching result between the audio feature of the target video and the audio feature of the video record in the feature database, may include: determining that the target video includes a duplicate video if the audio feature of the target video matches an audio feature of one video record in the feature database and the video record has been marked as a duplicate video; or, determining that the target video includes a duplicate video if the audio feature of the target video matches an audio feature of one video record in the feature database and an occurrence number of the video record plus 1 is greater than or equal to an occurrence number threshold.

The audio feature of the target video matches an audio feature of a video record in the feature database may include: duration of continuous matching between the audio feature of the target video and the audio feature of the video record is greater than or equal to a duration threshold. For example, when duration of continuous matching between an audio feature of a target video and an audio feature of a video record is greater than 5 seconds, it is considered that the two match each other. The present disclosure, however, is not limited in this respect.

In an embodiment, the audio feature may include at least one of the following: an audio amplitude waveform, an audio frequency spectrum, and a text message generated through speech recognition; and matching the audio feature of the target video with the audio feature of the video record in the feature database, may include one of the following: dividing, when the audio feature of the target video includes a text message generated through speech recognition, the text message of the target video into sentences, and matching, in units of sentences, the text message of the target video with a text message of the video record in the feature database generated through speech recognition; and dividing the video record in the feature database into a silent section and a voiced section when the audio feature of the target video includes at least one of the following: an audio amplitude waveform and an audio frequency spectrum, and matching, in units of voiced sections, the target video with the video record in the feature database.

In this way, it is possible to avoid one-by-one matching starting from a sampling point, which not only ensures accuracy of the matching, but also reduces calculation complexity.

In an exemplary embodiment, step S102 may include: skipping the duplicate video and continuing to play the target video according to duration of the duplicate video in the feature database if the target video is a video being played; and skipping the duplicate video according to the duration of the duplicate video in the feature database if the target video is a video to be recorded.

In an embodiment, the terminal, while playing a video, may identify whether the video being played includes a duplicate video using the feature database. When the terminal identifies that the video being played includes a duplicate video, the terminal skips the duplicate video and continues playing the video; when the terminal identifies that the video being played does not include a duplicate video, the terminal plays the video in order. Or, the terminal, while recording a video, may identify whether the video to be recorded includes a duplicate video using the feature database. When the terminal identifies that the video to be recorded includes a duplicate video, the terminal skips the duplicate video when recording the video; when the terminal identifies that the video to be recorded does not include a duplicate video, the terminal records the video in order.

In an exemplary embodiment, the method for data processing in this embodiment may further include: updating, when there is a video record in the feature database that matches the audio feature of the target video, information saved in the matched video record in the feature database; and adding, when there is no video record in the feature database that matches the audio feature of the target video, a video record corresponding to the target video to the feature database.

In an embodiment, updating, when there is a video record in the feature database that matches the audio feature of the target video, information saved in the matched video record in the feature database may include: retaining, when duration of continuous matching between the audio feature of the target video and an audio feature of one video record in the feature database is greater than or equal to a duration threshold, the audio feature in the video record that corresponds to the duration of continuous matching; and adding 1 to an occurrence number of the video record present in the feature database, and marking, if the occurrence number of the video record with addition of 1 is greater than or equal to an occurrence number threshold, the video record as a duplicate video.

In the process of identifying a duplicate video of the target video, a process of updating the feature database may be performed, so as to continuously optimize the feature database.

In this embodiment, using the feature database obtained by self-learning to identify a duplicate video can greatly improve user experience. Moreover, the creation and updating of the feature database do not require operations by a user, and the feature database may also be conveniently applied to identifying of duplicate videos in different scenes or types of videos.

In an exemplary embodiment, the method for data processing in this embodiment may further include: deleting a video record that meets a predetermined condition when it is detected that a total number of video records in the feature database is greater than or equal to a first aging threshold, or when it is detected that a total space size occupied by video records in the feature database is greater than or equal to a second aging threshold.

In this way, by introducing an aging mechanism, aging processing may be periodically performed on video records in the feature database, so that the feature database can be prevented from growing indefinitely.

The predetermined condition may include at least one of the following: an occurrence number of the video record is less than or equal to a first threshold, and duration between a most recent occurrence time of the video record and a current time is greater than or equal to a second threshold. The present disclosure, however, is not limited in this respect.

In the embodiment of the present disclosure, whether the target video includes a duplicate video is identified according to the audio feature of the target video and using the feature database. The feature database is obtained by learning an audio feature of one or more videos. If it is identified that the target video includes a duplicate video, the duplicate video is filtered. In this way, duplicate videos are identified by using the feature database obtained by learning audio features, which can improve user experience. For example, during playing of a video, a duplicate video may be automatically detected and skipped by using the feature database, which can improve user experience of watching the video. Or, during recording of a video, a duplicate video may be automatically detected and identified by using the feature database, so that the duplicate video can be skipped when the video is recorded, which facilitates subsequent watching of the video. Moreover, the feature database is obtained through self-learning. The creation and updating of the feature database do not require operations by a user, and the feature database may be conveniently applied to identifying of duplicate videos in different scenes or types of videos.

Fig. 2 is a schematic diagram of a device for data processing provided by an embodiment of the present disclosure. As shown in Fig. 2, the device for data processing provided in this embodiment includes an identification module 201, a processing module 202, and a feature database 203.

The identification module 201 is configured to determine, according to an audio feature of a target video and using the feature database 203, whether the target video includes a duplicate video. The feature database 203 is obtained by learning an audio feature of at least one video.

The processing module 202 is configured to filter, when the identification module 201 determines that the target video includes a duplicate video, the duplicate video.

In an embodiment, the device for data processing in this embodiment may further include an audio feature extraction module 200 configured to extract the audio feature of the target video.

The identification module 201 may be configured to identify, according to the audio feature of the target video and using the feature database 203, whether the target video includes a duplicate video, through the following ways: matching the audio feature of the target video with an audio feature of a video record in the feature database 203; and identifying whether the target video includes a duplicate video according to a matching result between the audio feature of the target video and the audio feature of the video record in the feature database 203.

For relevant descriptions of the device for data processing in this embodiment, reference may be made to the descriptions of the above method embodiments and the following examples. Detailed description will therefore not be provided herein.

The solutions of the present disclosure will be described below through a plurality of embodiments.

### Example 1

This embodiment illustrates automatic detection and skipping of a duplicate video during playing of a video by a terminal. In this embodiment, a target video is a currently played video.

Fig. 3 is a flowchart of this embodiment. As shown in Fig. 3, this embodiment includes the following steps S301 to S304.

In step S301, the terminal decodes the currently played video, and outputs video images and audio sounds.

In step S302, the terminal processes and analyzes the decoded audio sounds, extracts an audio feature, and identifies whether the currently played video is a duplicate video by using a feature database. In this embodiment, the feature database is automatically created and continuously updated during historical playing of videos by the terminal. If it is recognized that the currently played video is a duplicate video, perform S303; otherwise, perform S304.

In step S303, when it is recognized that the currently played video is a duplicate video, the terminal reads information (e.g., duration) of the duplicate video from the feature database, and then directly locates to a time point after the duration to play the video, i.e., skipping the duplicate video and continuing playing the video.

In step S304, when it is recognized that the currently played video is not a duplicate video, the terminal continues playing the current video in order, and adds a video record corresponding to the currently played video to the feature database, in which video record an audio feature of the current video is saved.

In this embodiment, a terminal user may set whether to enable the above function of automatically skipping duplicate videos. For example, when accessing an interface of playing software displayed on the terminal, the terminal gives the user a prompt to prompt the user to choose whether to enable the function of automatically skipping duplicate videos. After the user makes a selection, the selected function may be permanently effective, or may only be effective for use this time. In an embodiment, before performing the steps shown in Fig. 3, the terminal may first determine whether the function of automatically skipping duplicate videos is enabled. If the above function is enabled, the steps shown in Fig. 3 are performed; if it is not enabled, playing in normal order is performed.

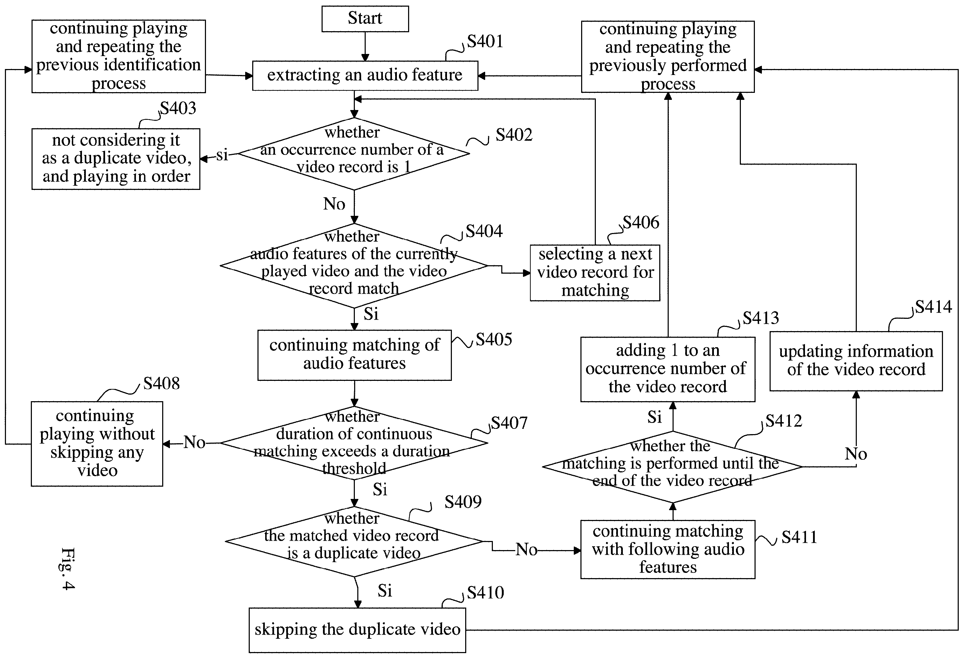

Fig. 4 is a flowchart of a process of detecting and identifying a duplicate video according to this embodiment. Steps S302 to S304 will be described in detail below with reference to Fig. 4. As shown in Fig. 4, the above process may include the following steps S401 to S414.

In step S401, the audio sounds in the currently played video are analyzed, and an audio feature is extracted. The audio feature may include but is not limited to at least one of the following: an audio amplitude waveform, an audio frequency spectrum, an audio zero-crossing rate, and a text message generated through speech recognition.

In this embodiment, the feature database is an audio feature database created and continuously updated during playing of videos by the terminal, in which audio features over some duplicate duration or audio features over entire duration of previously played videos are saved. Information saved in a video record in the feature database may include: an occurrence number, whether it is a duplicate video, an audio feature, and duration information (such as total duration of a video, duration having been played, etc.). If an occurrence number saved in a video record is 1, information saved in the video record may also include: a file name, a file path, and a uniform resource locator (URL), of a video. If an occurrence number saved in a video record is greater than 1, then a file name, a file path, or a URL saved therein if of no effect. In this embodiment, the audio feature of the currently played video extracted in step S401 is matched with audio features of video records in the feature database to look for a video record that matches the audio feature extracted in step S401. The video records in the feature database are traversed in an order of from a higher occurrence number to a lower occurrence number, so as to increase the chance of fast hitting a match.

The process of matching the audio feature of the currently played video with the audio features of the video records will be described below.

In step S402, it is determined whether an occurrence number of a video record is 1, and whether at least one of a file name, a file path, and a URL of the currently played video is consistent with that of the video record with the occurrence number of 1 in the feature database. If the occurrence number of the video record is 1, and at least one of the file name, the file path, and the URL of the currently played video matches that of the video record, perform step S403; otherwise, perform step S404.

In step S403, when the currently played video is not considered a duplicate video, the matching with the video records in the feature database is stopped, and the currently played video is played in order.

In this embodiment, if at least one of the file name, the file path, and the URL of the currently played video is the same as that a video record with an occurrence number of 1 in the feature database, it means that the currently played video is a video corresponding to the video record, and therefore, the currently played video is not considered as a duplicate video, and the occurrence number of the video record is not added with 1. If played duration in the video record is less than total duration, it means that the video was not completely played last time. If the played duration exceeds the played duration of last time, an audio feature over an exceeded duration may be saved in the video record, and the played duration in the video record is updated.

In step S404, it is determined whether the audio feature of the currently played video matches an audio feature of a video record. If the two match, perform step S405; otherwise, perform step S406, i.e., select a next video record for matching.

In this embodiment, if the audio feature includes a text message generated through speech recognition, the text message may be divided into sentences, and the currently played video and the video record are matched in units of sentences. If the audio feature includes at least one of the following: an audio amplitude waveform and an audio frequency spectrum, the video may be divided into a silent section and a voiced section by using pulse code modulation (PCM) level values, and then matching and comparison may be performed in units of voiced sections, i.e., a voiced section of the currently played video is compared with each voiced section of the video record. Because there is usually a silent section between a duplicate video (such as an opening title sequence and an advertisement) and a main part, performing the matching in units of voiced sections may not only ensure accuracy of the matching, but also avoid one-by-one matching starting from each sampling point, by way of which calculation complexity can be greatly reduced.

In this embodiment, after traversing all the video records in the feature database, if there is no video record in the feature database that matches the audio feature of the currently played video, a video record corresponding to the currently played video may be added to the feature database. Information saved in this video record may include: an occurrence number (may be recorded as 1), an audio feature of the currently played video, and duration information, and may also record a file name, a file path, or a URL of the currently played video.

In step S405, if the audio feature of the currently played video matches an audio feature of a certain video record, and a matching point is not a starting point of the video record, then an audio feature before the matching point is deleted from the video record, and only an audio feature of a matched part is retained, and then matching with following audio features is continued. The audio feature before the matching point may be permanently deleted, or may be re-saved as a new video record for subsequent extraction of possible duplicate videos therein.

In step S407, it is determined whether duration of continuous matching between the audio feature of the currently played video and the audio feature of the video record exceeds a duration threshold. If the duration of continuous matching exceeds the duration threshold, perform step S409; otherwise, perform step S408, i.e., continuing playing the current video without skipping any video, and repeatedly using the feature database to identify a duplicate video during the continued playing.

In step S409, when the duration of continuous matching exceeds the duration threshold (such as 5 seconds), it is checked whether the matched video record in the feature database is marked as a duplicate video. If the matched video record in the feature database is marked as a duplicate video, perform step S410. This indicates: the currently played video is a duplicate video; the duplicate video can be skipped according to duration of the duplicate video; playing of the video can then be continued; and during continued playing, the feature database can be repeatedly used to identify a duplicate video. If the video record is not marked as a duplicate video, perform step S411, i.e., continuing matching with following audio features until an end of the video record in the feature database.

In step S412, it is determined whether the matching of the audio feature of the currently played video is performed until the end of the video record. If the matching is performed until the end of the video record, perform step S413; otherwise, perform step S414.

In step S413, if the matching is performed until the end of the video record, it means that the currently played video over this duration exactly matches the video record, then an occurrence number of the video record may be added with 1. If the occurrence number with the addition of 1 exceeds an occurrence threshold (for example, 2), the matched video record may be marked as a duplicate video.

In step S414, if the matching is performed not until the end of the video record, then information of the video record is updated, and unmatched audio features after a matching end point are deleted from the video record, and meanwhile the occurrence number is added with 1. If the occurrence number with the addition of 1 exceeds the occurrence threshold, the matched video record may be marked as a duplicate video. The audio features after the matching end point may be re-saved as new video records, for future extraction of possible duplicate videos therein.

In this embodiment, if it is recognized that the currently played video is a duplicate video, then duration of the duplicate video is read from the feature database, and the video is continued to be played by directly skipping to a time point after the duration; and in subsequent playing, the above process of identifying a duplicate video is continued, and if a duplicate video is again identified, the playing is continued by skipping the repeat video.

In this embodiment, in order to prevent the feature database from growing indefinitely and occupying too much memory space and to prevent increase of a time for traversal and matching, an aging mechanism is introduced to periodically performing aging processing to video records that have been in the feature database for too long a time or have occurred too few times.

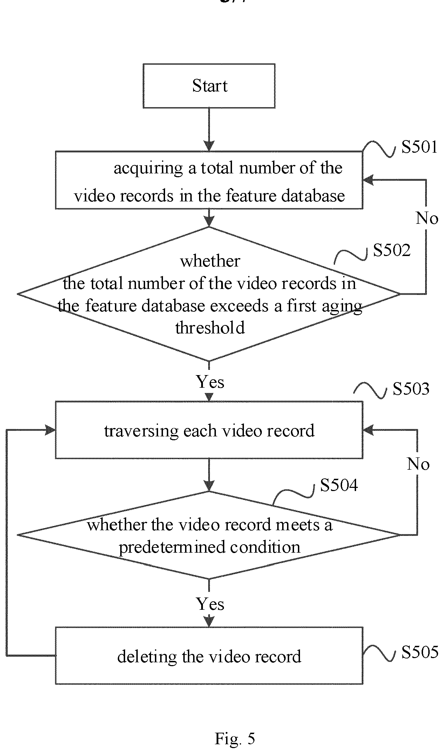

Fig. 5 is a flowchart of aging processing of the feature database according to an embodiment of the present disclosure. An aging processing flow of the feature database may be executed periodically by means of a separately created thread, or executed when a trigger instruction is received. The present disclosure, however, is not limited in this respect.

As shown in Fig. 5, the aging processing flow of the feature database includes the following steps S501 to S505.

In step S501, a total number of the video records in the feature database is acquired.

In step S502, it is determined whether the total number of the video records in the feature database exceeds a first aging threshold. If it exceeds the first aging threshold, perform step S503; otherwise, return to step S501.

In step S503, each video record in the feature database is traversed.

In step S504, it is determined whether a video record meets a predetermined condition. For example, the predetermined condition may include: an occurrence number of a video record is less than a first threshold, and duration between a most recent occurrence time of the video record and a current time is greater than a second threshold. If it is determined that the current video record satisfies the predetermined condition, perform step S505, i.e., delete the video record; otherwise, return to step S503, to traverse a next video record. The first threshold and the second threshold may be predetermined.

In this embodiment, if an occurrence number of a video record in the feature database is too small, and a duration between a most recent occurrence time and a current time has exceeded a certain duration, it may be considered that the video record is likely not a duplicate video and may be deleted to reduce capacity of the feature database.

It shall be noted that during the aging processing, in step S501, a total space size occupied by the video records in the feature database may also be acquired. In step S502, whether to perform the aging processing or not is determined by determining whether the total space size occupied is greater than or equal to a second aging threshold. The present disclosure, however, is not limited in this respect. The first aging threshold and the second aging threshold may be predetermined according to a total storage capacity of the feature database.

In this embodiment, for the process of creating and updating the feature database, reference can be made to Fig. 4, which shows the feature database is created and updated during playing of videos. The present disclosure, however, is not limited in this respect. In other embodiments, the terminal may first create and update the feature database according to audio features of a plurality of locally stored videos, and then use the updated feature database to directly play a video; or in the process of creating and updating the feature database by using the plurality of locally stored videos, a duplicate video in each video may be identified by an identifier, and then duplicate videos can be directly skipped according to the identifiers when these videos are played.

### Example 2

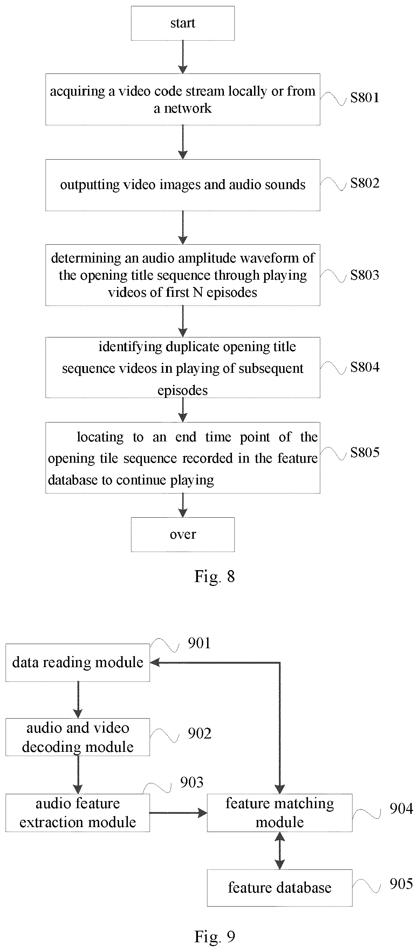

This embodiment illustrates automatic detection and skipping of advertisements through speech recognition. Advertisements are often inserted in video resources such as movies and TV dramas that users usually watch. It is often the case that users want to skip these advertisements and directly watch main parts thereafter. This embodiment provides a playing device for automatically detecting and skipping advertisements. As shown in Fig. 9, the playing device in this embodiment may include: a data reading module 901 (equivalent to the aforementioned processing module), an audio and video decoding module 902, an audio feature extraction module 903, a feature database 905, and a feature matching module 904 (equivalent to the aforementioned identification module). The playing device in this embodiment may be a smart terminal device such as a smart phone, a tablet computer, or various players or software provided on a smart terminal device. The present disclosure, however, is not limited in this respect.

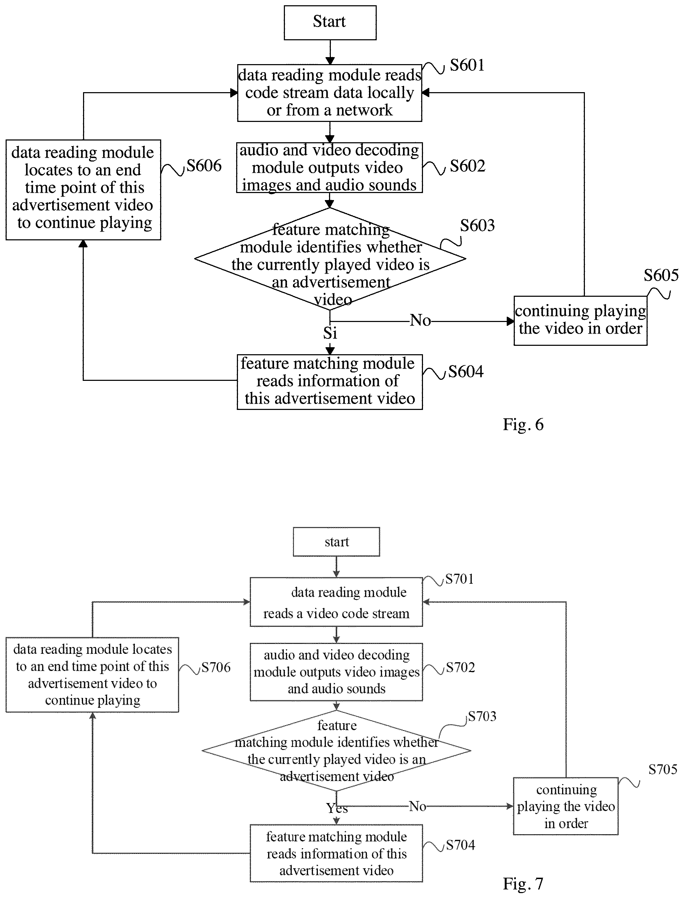

Fig. 6 is a schematic flowchart of this embodiment. As shown in Fig. 6, this embodiment includes the following steps S601 to S606.

In step S601, the playing device plays a locally recorded video or a video on-demand (VOD) from the internet, and the data reading module acquires a video code stream to be played from a local storage device or a network.

In step S602, the audio and video decoding module of the playing device decodes the acquired video code stream, and outputs video images and audio sounds.

In step S603, the audio feature extraction module analyzes the audio sounds in the video played, recognizes a speech into a text through speech recognition, divides the text into sentences, and takes these sentences as audio features to be matched; the feature matching module identifies whether the currently played video is a duplicate video by using the feature database. In this example, the duplicate video refers to an advertisement video.

The feature matching module matches the sentences recognized in step S603 one by one with sentence features of video records in the feature database, and compares them in units of complete sentences. The video records in the feature database are traversed in an order from a higher occurrence number to a lower occurrence number.

In step S604, if there is a matched video record in the feature database, and this video record is recorded as a duplicate video (in this example, it is an advertising video), the feature matching module reads information (such as duration) of this duplicate video from the feature database, and sends the information to the data reading module of the playing device.

In step S606, the data reading module directly locates to a time point after this duration to continue playing, that is, skips the advertisement video and locates to an end time point of the advertisement video to continue playing.

In step S605, if there is no matched video record in the feature database, the data reading module continues playing the video in order, and saves sentence feature information to the feature database to update the feature database.

It shall be noted that reference may be made to Fig. 4 for the process of creating and updating the feature database, which therefore will not be detailed herein.

### Example 3

This embodiment illustrates automatic detection and skipping of advertisements by means of audio amplitude waveforms. This embodiment differs from Embodiment 2 in that in this embodiment, matching is performed by using an audio amplitude waveform of a video program as an audio feature.

This embodiment provides a playing device for automatically detecting and skipping advertisements. As shown in Fig. 9, the playing device in this embodiment may include: a data reading module 901 (equivalent to the aforementioned processing module), an audio and video decoding module 902, an audio feature extraction module 903, a feature database 905, and a feature matching module 904 (equivalent to the aforementioned identification module).

Fig. 7 is a schematic flowchart of this embodiment. As shown in Fig. 7, this embodiment includes the following steps S701 to S706.

In step S701, the playing device plays a locally recorded video or a VOD video from the internet, and the data reading module acquires a video code stream to be played from a local storage device or a network.

In step S702, the audio and video decoding module of the playing device decodes the acquired video code stream, and outputs video images and audio sounds.

In step S703, the audio feature extraction module analyzes the audio sounds in the played video, and samples an audio amplitude at that time every certain time. The audio amplitudes at multiple times depict an audio amplitude waveform. The feature matching module identifies whether the currently played video is a duplicate video by using the feature database. In this example, the duplicate video refers to an advertisement video.

The feature matching module matches the audio amplitude waveform extracted in step S703 one by one with audio amplitude waveforms of video records in the feature database. Because there is usually a silent section between a duplicate video (such as an opening title sequence, an advertisement, and the like) and a main part, a video file may be divided into a silent section and a voiced section by using pulse code modulation (PCM) level values, the silent section and the voiced section being arranged alternately. Matching and comparison are performed in units of voiced sections, and comparison is performed starting from a starting point of a voiced section. In the case that there is a duplicate video in a video record in the feature database that is the same as a duplicate video in the currently played video, it can be guaranteed that a starting point of this duplicate video can be found, and failure to find the duplicate video will not be resulted in because of a matching failure due to staggering of time points of the comparison. In addition, this also avoids the need of one-by-one matching starting from each sampling point, which may not only ensure accuracy of the matching, but also greatly reduce calculation complexity.

In step S704, if there is a matched video record in the feature database, and this video record is recorded as a duplicate video (in this example, it is an advertising video), the feature matching module reads information (such as duration) of this duplicate video from the feature database, and sends the information to the data reading module of the playing device.

In step S706, the data reading module directly locates to a time point after this duration to play, i.e., skips the advertisement video and locates to an end time point of the advertisement video to continue playing.

In step S705, if there is no matched video record in the feature database, the data reading module continues playing the video in order, and saves audio feature information to the feature database to update the feature database.

It shall be noted that the process of creating and updating the feature database may refer to Fig. 4, and therefore it will not be repeated herein.

### Example 4

This embodiment illustrates the automatic detection and skipping of an opening title sequence of a TV drama by means of an audio amplitude waveform. Users sometimes have the habit of binge-watching a drama, i.e., downloading an entire TV drama from the internet to watch it locally, or watching it on-demand on a TV drama module of a set-top box. Some TV dramas have long opening title sequences at the beginning of each episode. It is a tedious thing for users to watch a duplicate opening title sequence every time. If users do not want to watch the duplicate opening title sequence, they have to manually operate a remote control to skip it by fast forwarding, which leads to poor user experience.

This embodiment provides a playing device that automatically detects and skips an opening title sequence of a TV drama. As shown in Fig. 9, the playing device in this embodiment may include: a data reading module 901 (equivalent to the aforementioned processing module), an audio and video decoding module 902, an audio feature extraction module 903, a feature database 905, and a feature matching module 904 (equivalent to the aforementioned identification module).

Fig. 8 is a schematic flowchart of this embodiment. As shown in Fig. 8, this embodiment includes the following steps S801 to S805.

In step S801, the playing device plays a locally recorded or an on-demand TV drama video (VOD) from network, and the data reading module acquires a video code stream to be played from a local storage device or a network.

In step S802, the audio and video decoding module of the playing device decodes the acquired video code stream, and outputs video images and audio sounds.

In step S803, the audio feature extraction module processes and analyzes the decoded audio sounds, depicts an audio amplitude waveform, identifies an audio amplitude waveform of the opening title sequence through playing videos of first N episodes (where N may be an integer greater than or equal to 2), and creates a video record of the duplicate video in the feature database. In this example, the duplicate video refers to an opening title sequence video of a TV drama. For a matching method of audio features, reference may be made to the description of Embodiment 3, and for the process of creating and updating the feature database, reference may be made to Fig. 4, and therefore details will not be repeated herein.

In step S804, in playing of subsequent episodes, the audio feature extraction module extracts the audio amplitude waveform of the opening title sequence, and the feature matching module matches the audio amplitude waveform of the opening title sequence with an audio amplitude waveform of a video record in the feature database, to identify an opening title sequence video of the currently played episode. For the matching method of the audio features, reference may be made to the description of Embodiment 3, and therefore it will not be repeated herein in detail.

In step S805, the data reading module locates to an end time point of the opening title sequence recorded in the feature database to continue playing. In this way, users do not need to watch the opening title sequence video during binge-watching, which improves user experience.

### Example 5

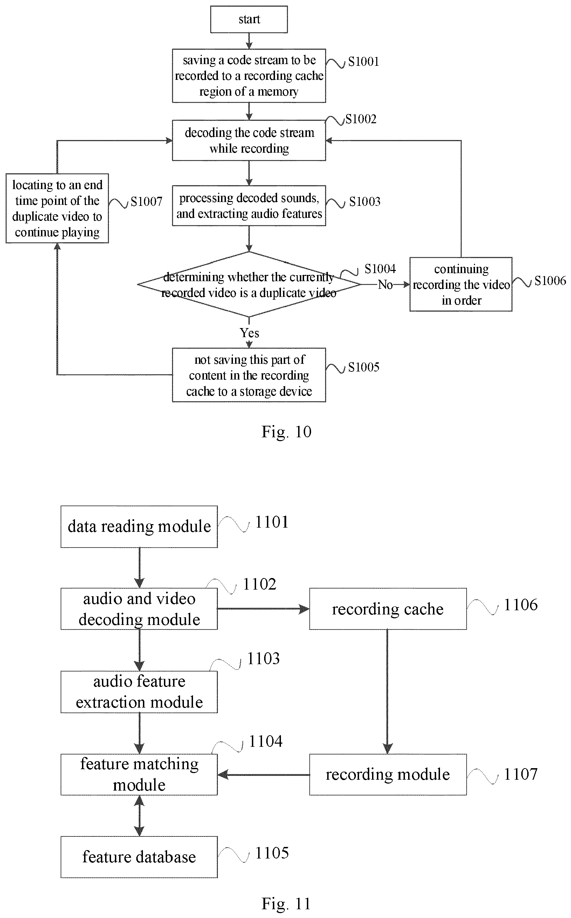

This embodiment illustrates automatic detection and skipping of duplicate videos during recording of a video by a terminal. Users often use a set-top box to record a program that they want to watch later to a local storage device for later watching. This embodiment provides a recording device that automatically detects and skips a duplicate video. As shown in Fig. 11, the recording device provided in this embodiment may include: a data reading module 1101, an audio and video decoding module 1102, an audio feature extraction module 1103, a feature database 1105, and a feature matching module 1104 (equivalent to the aforementioned identification module), a recording cache 1106, and a recording module 1107 (equivalent to the aforementioned processing module). The recording device in this embodiment may be a smart terminal device such as a set-top box, a smart phone, a tablet computer, and the like. The present disclosure, however, is not limited in this respect.

Fig. 10 is a flowchart of this embodiment. As shown in Fig. 10, this embodiment includes the following steps S1001 to S1007.

In step S1001, the recording device first saves a code stream to be recorded to a recording cache region of a memory.

In step S1002, the audio and video decoding module decodes the code stream while recording.

In step S1003, the audio feature extraction module processes and analyzes decoded sounds, and extracts audio features.

In step S1004, the feature matching module uses a feature database to identify whether the currently recorded video is a duplicate video. The feature database is an audio feature database that is automatically created from historically played videos. For the matching method of the audio feature and the method of creating and updating the feature database, reference may be made to the description of the above embodiments, and it will not be described further herein in detail.

In step S1005, if it is recognized that the currently recorded content is a duplicate video, the recording module does not save this part of content in the recording cache to a storage device.

In step S1007, this part of content is skipped and matching of contents to be recorded thereafter is continued. If an audio feature of the recorded content is the same as an audio feature of a duplicate video in the feature database, the recording module continues not to save this part of content in the recording cache to the storage device, and does not continue recording until encountering an unmatched content in the feature database, i.e., saves it to the storage device.

In step S 1006, if it is identified that the currently recorded content is not a duplicate video, the recording module continues recording the video in order, i.e., continues saving the content in the recording cache to the storage device.

In this way, the user may skip the duplicate video and record without the duplicate video, which is convenient for subsequent watching.

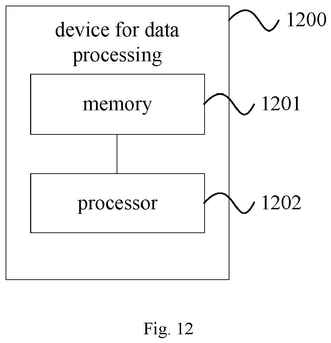

Fig. 12 is a schematic diagram of a device for data processing provided by this embodiment. As shown in Fig. 12, the device for data processing 1200, for example, a terminal or a server, provided in this embodiment includes: a memory 1201 and a processor 1202. The memory 1201 is configured to store a data processing program. The data processing program, when being executed by the processor 1202, implements steps of the above method for data processing.

The processor 1202 may include but is not limited to a processing device such as a microprocessor (Microcontroller Unit, MCU) or a programmable logic device (Field Programmable Gate Array, FPGA). The memory 1201 may be configured to store software programs and modules of application software, such as program instructions or modules corresponding to the method for data processing in this embodiment. The processor 1202 executes various functional applications and data processing (for example, implementing the method for data processing provided in this embodiment) by operating the software programs and modules stored in the memory 1201. The memory 1201 may include a high-speed random access memory, and may also include a non-volatile memory, such as one or more magnetic storage devices, flash memories, or other non-volatile solid-state memories. In some examples, the memory 1201 may include memories remotely provided with respect to the processor 1202. These remote memories may be connected to the device for data processing 1200 via a network. Examples of the above network include but are not limited to the Internet, an intranet, a local area network, a mobile communication network, and combinations thereof.

Further, an embodiment of the present disclosure provides a computer storage medium that stores a data processing program. The data processing program, when being executed by the processor, implements the above method for data processing.

Those of ordinary skill in the art shall appreciate that all or some of the steps of the methods disclosed above, and the functional modules/units of the systems and devices disclosed above, may be implemented as software, firmware, hardware, and any suitable combinations thereof. In hardware implementations, the division between functional modules/units referred to in the above description does not necessarily correspond to the division between physical components. For example, one physical component may have multiple functions, or one function or step may be executed by a combination of a plurality of physical components. Some or all of the components may be implemented as software executed by a processor, such as a digital signal processor or a microprocessor, or be implemented as hardware, or as an integrated circuit, such as an application-specific integrated circuit. Such software may be distributed on a computer-readable medium which may include computer storage medium (or non-transitory medium) and communication medium (or transitory medium). As known by those of ordinary skill in the art, the term computer storage medium includes volatile and nonvolatile, removable and non-removable medium implemented in any method or technology for storage of information (such as computer-readable instructions, data structures, program modules, or other data). Computer storage medium includes, but is not limited to, random access memory (RAM), read only memory (ROM), electrically erasable programmable read-only memory (EEPROM), flash memory or other memory technologies, compact disc read-only memory (CD-ROM), digital versatile disk (DVD) or other optical disk storages, magnetic cassettes, magnetic tapes, magnetic disk storages or other magnetic storages, or any other medium that can be used to store desired information and can be accessed by a computer. In addition, it is known to those of ordinary skill in the art that, communication medium typically contains computer-readable instructions, data structures, program modules or other data in a modulated data signal such as a carrier wave or other transport mechanism, and may include any information delivery medium.

## Claims

1. A method for data processing, comprising:
determining(S101), according to an audio feature of a target video and by using a feature database, whether the target video includes a duplicate video, wherein the feature database is obtained by learning an audio feature of at least one video; and
filtering(S102), in response to determining that the target video includes a duplicate video, the duplicate video.

2. The method according to claim 1, further comprising: extracting the audio feature of the target video;
wherein determining, according to the audio feature of the target video and by using the feature database, whether the target video includes a duplicate video, comprises:
matching the audio feature of the target video with an audio feature of a video record in the feature database; and
determining whether the target video includes a duplicate video based on a matching result between the audio feature of the target video and the audio feature of the video record in the feature database.

3. The method according to claim 2, wherein determining whether the target video includes a duplicate video based on the matching result between the audio feature of the target video and the audio feature of the video record in the feature database, comprises:
determining that the target video includes a duplicate video based on determining that the audio feature of the target video matches an audio feature of one video record in the feature database and that the one video record has been marked as a duplicate video; or,
determining that the target video includes a duplicate video based on determining that the audio feature of the target video matches an audio feature of one video record in the feature database and that an occurrence number of the one video record plus 1 is greater than or equal to an occurrence number threshold.

4. The method according to claim 2, wherein the audio feature comprises at least one of the following: an audio amplitude waveform, an audio frequency spectrum, and a text message generated through speech recognition; and
matching the audio feature of the target video with an audio feature of a video record in the feature database comprises one of the following:
dividing, based on determining that the audio feature of the target video includes a text message generated through speech recognition, the text message of the target video into sentences, and matching, in units of sentences, the text message of the target video with a text message of the video record in the feature database generated through speech recognition; and
dividing the video record in the feature database into a silent section and a voiced section based on determining that the audio feature of the target video includes at least one of an audio amplitude waveform and an audio frequency spectrum, and matching, in units of voiced sections, the target video with the video record in the feature database.

5. The method according to claim 2, further comprising
updating, based on determining that there is a video record in the feature database that matches the audio feature of the target video, information saved in the video record in the feature database that matches the audio feature of the target video; and
adding, based on determining that there is no video record in the feature database that matches the audio feature of the target video, a video record corresponding to the target video to the feature database.

6. The method according to claim 5, wherein updating, based on determining that there is a video record in the feature database that matches the audio feature of the target video, the information saved in the video record in the feature database that matches the audio feature of the target video, comprises:
retaining, based on determining that duration of continuous matching between the audio feature of the target video and an audio feature of one video record in the feature database is greater than or equal to a duration threshold, the audio feature in the one video record that corresponds to the duration of continuous matching; and
adding 1, based on determining that duration of continuous matching between the audio feature of the target video and an audio feature of one video record in the feature database is greater than or equal to a duration threshold, to an occurrence number of the one video record present in the feature database, and marking, based on determining that the occurrence number of the one video record with addition of 1 is greater than or equal to an occurrence number threshold, the video record as a duplicate video.

7. The method according to claim 1, wherein filtering, in response to determining that the target video includes a duplicate video, the duplicate video, comprises:
skipping the duplicate video and continuing to play the target video according to duration of the duplicate video in the feature database based on determining that the target video is a video being played; and
skipping the duplicate video according to the duration of the duplicate video in the feature database based on determining that the target video is a video to be recorded.

8. The method according to claim 1, further comprising:
deleting a video record that meets a predetermined condition based on detecting that a total number of video records in the feature database is greater than or equal to a first aging threshold, or based on detecting that a total space size occupied by video records in the feature database is greater than or equal to a second aging threshold.

9. The method according to claim 8, wherein the predetermined condition comprises at least one of the following: an occurrence number of the video record is less than or equal to a first threshold, and duration between a most recent occurrence time of the video record and a current time is greater than or equal to a second threshold.

10. The method according to claim 1, further comprising: obtaining the feature database by learning an audio feature of at least one video through the following ways:
adding a video record corresponding to any video to the feature database based on determining that there is no video record in the feature database; and
updating, based on determining that there is a video record in the feature database, the feature database according to a matching result between the audio feature of the at least one video and an audio feature of the video record in the feature database.

11. The method according to claim 10, wherein information saved in any video record in the feature database comprises: an occurrence number, whether it is a duplicate video, an audio feature, and duration information, wherein when the occurrence number is 1, the information saved in the video record further comprises at least one of the following: a file name, a path, and a uniform resource locator of a video.

12. A device for data processing, comprising:
an identification module(201), a feature database(203), and a processing module(202), wherein:
the identification module(201) is configured to determine, according to an audio feature of a target video and by using the feature database(203), whether the target video includes a duplicate video, wherein the feature database(203) is obtained by learning an audio feature of at least one video; and
the processing module(202) is configured to filter, when the identification module(201) determines that the target video includes a duplicate video, the duplicate video.

13. The device according to claim 12, further comprising:
an audio feature extraction module(200) configured to extract the audio feature of the target video,
wherein the identification module(201) is configured to determine, according to the audio feature of the target video and by using the feature database(203), whether the target video includes a duplicate video, through the following ways:
matching the audio feature of the target video with an audio feature of a video record in the feature database(203); and
determining whether the target video includes a duplicate video according to a matching result between the audio feature of the target video and the video record in the feature database(203).

14. A device for data processing, comprising: a memory and a processor, the memory being configured to store a data processing program, wherein the data processing program, when being executed by the processor, implements the method for data processing according to any one of claims 1 to 11.

15. A computer-readable medium storing a data processing program, wherein the data processing program, when being executed by a processor, implements the method for data processing according to any one of claims 1 to 11.
